# FASCICULE DE BREVET EUROPEEN

(11) **EP 2 867 551 B1**
(45) Date de publication et mention de la délivrance du brevet: **25.05.2016**
(21) Numéro de dépôt: 13744645.6
(22) Date de dépôt: 27.06.2013
(51) Int. Cl.: F04D 29/063

(54) **PALIER A MOYEN DE LUBRIFICATION ET SYSTEME POUR CHANGER LE PAS DES PALES D'UNE HELICE DE TURBOPROPULSEUR D'AERONEF, EQUIPE DUDIT PALIER**
LAGER MIT SCHMIERMITTEL UND ANORDNUNG ZUM ÄNDERN DER SCHAUFELSTEIGUNG EINES TURBOANTRIEBSWERKS EINES MIT DIESEM LAGER AUSGESTATTETEN FLUGZEUGES
BEARING WITH LUBRICATION MEANS AND SYSTEM FOR CHANGING THE PITCH OF FAN BLADES OF AN AIRCRAFT TURBOFAN ENGINE EQUIPPED WITH SAID BEARING

(30) Priorité: 27.06.2012 FR 1256140
(43) Date de publication de la demande: 06.05.2015
(73) Titulaire: SNECMA, 75015 Paris (FR)
(72) Inventeur: FRANTZ, Caroline, F-77550 Moissy-Cramayel cedex (FR); IGEL, Domik, F-77550 Moissy-Cramayel cedex (FR); HUGON, Nadège, F-77550 Moissy-Cramayel cedex (FR); CURLIER, Augustin, F-77550 Moissy-Cramayel cedex (FR)
(74) Mandataire: Gevers & Orès
(86) Numéro de dépôt international: PCT/FR2013/051502
(87) Numéro de publication internationale: WO 2014/001723

(56) Documents cités:
- EP-A2- 0 361 982
- WO-A2-2009/000268

## Description

La présente invention concerne un palier à moyen de lubrification amélioré, un système pour changer le pas des pales d'une hélice de turbopropulseur d'aéronef, équipé dudit palier à moyen de lubrification amélioré, ainsi qu'un turbopropulseur équipé d'un tel système.

D'une façon générale, le palier selon l'invention est destiné à être monté sur un support mobile en translation qui, dans l'application préférentielle, quoique non exclusive, décrite ci-après, peut être un vérin linéaire faisant partie d'un système d'orientation des pales d'une hélice.

Un tel système d'orientation est notamment monté dans les turbopropulseurs à doublet d'hélices de propulsion contrarotatives, désignés en anglais «open rotor » ou « unducted fan », mais pourrait également, saris sortir du cadre de l'invention, être monté sur un turbopropulseur à une hélice de propulsion.

On sait qu'un turbopropulseur du type « open rotor » comprend principalement, selon un axe longitudinal et à l'intérieur d'une nacelle cylindrique fixe portée par la structure de l'aéronef (comme la partie arrière du fuselage d'un avion), une partie « générateur de gaz » et, derrière ou devant celle-ci, une partie «propulsion ». Cette dernière comporte deux hélices coaxiales et contrarotatives, respectivement amont (avant) et aval (arrière) qui sont entraînées, en rotation inverse l'une de l'autre, par exemple, par un réducteur épicycloïdal entraîné par une turbine basse pression de la partie générateur de gaz, et dont les pales des hélices s'étendent sensiblement radialement à l'extérieur de la nacelle.

Chaque hélice comprend usuellement un moyeu à anneau polygonal extérieur (rotor), reçu de façon rotative dans la nacelle fixe et ayant des logements cylindriques radiaux répartis à sa périphérie autour de l'axe longitudinal du turbopropulseur. Dans les logements de chaque anneau sont reçus les pieds des pales.

Pour permettre le fonctionnement optimal du turbopropulseur selon les différentes phases de vol rencontrées, les pales des hélices contrarotatives peuvent tourner dans les logements radiaux des anneaux. Pour cela, elles sont entraînées en rotation autour de leurs axes de pivot respectifs, par un système approprié permettant de faire varier le calage des pales en cours de vol, c'est-à-dire le pas des hélices.

Différentes solutions ont été proposées pour changer le pas des pales des hélices sur des turbomoteurs « open rotor » ou autres.

On connaît le système enseigné par le document FR 2 908 451 pénalisé cependant par des problèmes de surdimensionnement, de masse et d'étanchéité et, récemment, le système décrit dans la demande de brevet français du demandeur FR 11 58891. (FR 2980770).

Ce système d'orientation des pales d'une hélice comporte :
- un vérin à déplacement linéaire centré sur l'axe longitudinal du turbopropulseur et solidaire d'un carter fixe supportant l'hélice ;
- un mécanisme de liaison pour transformer la translation de la partie mobile du vérin en une rotation des pales pour en modifier le pas, et comportant un palier de transfert dont la bague interne est solidaire de la partie mobile du vérin, et un moyen de transmission entre la bague externe du palier et les pales, et
- un moyen de lubrification dudit palier de transfert.

Ainsi, par un unique vérin annulaire dans cet exemple à déplacement linéaire fixé à un carter fixe ou stator, et par un mécanisme de liaison à palier de transfert et moyen de transmission, le système permet de passer une translation du vérin en une rotation des pales, avec une grande fiabilité de fonctionnement, une masse et un encombrement réduits, et une étanchéité garantie puisque le vérin (sa partie fixe) est solidaire du carter fixe de la turbomachine, supportant le rotor de l'hélice.

Bien qu'un tel système d'orientation des pales donne des résultats satisfaisants, tant du point de vue structurel que fonctionnel, des réserves sont néanmoins apparues en ce qui concerne la lubrification du palier de transfert qui est soumis à des contraintes thermiques et mécaniques importantes.

Dans une solution connue, le moyen de lubrification est composé de gicleurs situés respectivement des deux côtés transversaux amont, aval du palier, et alimentés par une source de lubrification. Ainsi, les jets issus des gicleurs lubrifient le palier. Cependant, lorsque le palier est déplacé en translation avec la partie mobile du vérin, il se trouve plus près de l'un des gicleurs et, a fortiori, plus éloigné de l'autre, de sorte que l'efficacité du jet éloigné est moindre.

De plus, la lubrification d'un palier, tel qu'un roulement à une ou plusieurs rangées de billes ou rouleaux, par ses faces transversales, n'est pas optimale et nécessite un ciblage précis en fonction notamment de la géométrie de la bague interne, de la cage et de la bague externe du palier.

En outre, le moyen de lubrification est difficile à intégrer autour du vérin en raison de l'environnement limité, très contraignant (côté amont, espace limité et boîte de transmission de puissance proche ; côté aval, pas de possibilité d'alimentation).

Une autre solution de moyen de lubrification consiste à prévoir des fuites constantes calibrées entre les chambres du vérin, c'est-à-dire les parties mobile et fixe de celui-ci, et l'enceinte propulseur contenant le palier et le moyen de transmission. Une telle solution a des conséquences sur le dimensionnement du système hydraulique de commande de pas qui alimente directement le vérin, ainsi que sur le fonctionnement (augmentation dimensionnelle de la pompe, fuites à prendre en compte dans les performances et l'opérabilité du système).

De plus, comme la pression dans les chambres du vérin varie, les fuites sont inégales durant le fonctionnement. Le palier de transfert est par ailleurs toujours lubrifié par les côtés transversaux, comme précédemment avec les inconvénients qui en résultent. Enfin, compte tenu de l'effet centrifuge, il est difficile de maintenir correctement le débit de fuite du vérin en direction de la bague interne du palier.

Ainsi, d'une façon générale, la lubrification d'un palier monté sur un support mobile en translation (dans l'application ci-dessus, un vérin ou analogue) pose des problèmes.

La présente invention a pour but de remédier à ceux-ci et concerne un palier monté sur un support mobile, dont la conception du moyen de lubrification garantit notamment une lubrification optimale dudit palier, sans encombrer l'espace et, dans l'application ci-dessus, indépendante du système d'alimentation du vérin.

À cet effet, le palier, tel qu'un roulement, monté sur un support mobile en translation et comportant un moyen de lubrification, le support mobile en translation étant défini par la partie mobile coulissant autour du piston fixe d'un vérin à déplacement linéaire, autour de laquelle est montée la bague interne du palier à lubrifier, le moyen de lubrification du palier comportant au moins une canalisation d'acheminement d'un lubrifiant, reliée à une source d'alimentation en lubrifiant, et un conduit lié au support mobile, dans lequel s'engage au moins partiellement la canalisation du lubrifiant pour acheminer, selon un chemin interne, le lubrifiant depuis ledit support mobile jusqu'au palier en passant par la bague interne de celui-ci, ledit palier étant remarquable, selon l'invention, par le fait que ladite canalisation et ledit conduit s'étendent parallèlement au déplacement en translation du support mobile pour coopérer l'un avec l'autre par coulissement entre les deux positions extrêmes du support, ladite canalisation étant fixe et le conduit coulissant par rapport à celle-ci.

Ainsi, grâce à l'invention, le moyen de lubrification se trouve pour l'essentiel intégré au support mobile, à l'intérieur de celui-ci, pour alimenter en lubrifiant le palier directement par sa bague interne, permettant une lubrification optimale et homogène de celui-ci, contrairement à une lubrification aléatoire et inégale par l'extérieur, par les côtés transversaux du palier. De plus, un tel moyen de lubrification par canalisation et chemin interne intégré n'encombre pas l'environnement extérieur.

Dans l'application précitée, le moyen de lubrification est indépendant du système d'alimentation du vérin et des inconvénients que cela engendre, et s'affranchit de surcroît de gicleurs et autres accessoires annexes extérieurs au vérin et difficiles à installer par le manque d'espace.

De plus, le lubrifiant issu de la canalisation circule intégralement, par le conduit du chemin interne, dans la paroi latérale du support (la partie mobile du vérin) jusqu'à venir lubrifier l'intérieur du palier, alors que le support peut coulisser par rapport à la canalisation fixe (et donc à la partie fixe du vérin). On remarque aussi la simplicité de réalisation du moyen de lubrification.

Selon un exemple de réalisation, le conduit est ménagé dans une paroi latérale du support mobile en translation et dans lequel le chemin interne comporte au moins un trou ménagé dans la bague interne du palier et en communication avec le conduit.

Pour optimiser au mieux la lubrification du palier, plusieurs canalisations peuvent être réparties angulairement les unes par rapport aux autres, et communiquant, du côté amont, avec un élément commun d'acheminement du lubrifiant en liaison avec la source d'alimentation, et s'engager, du côté aval, dans des conduits respectifs prévus en correspondance dans la paroi du support mobile.

Par ailleurs, lorsque le support est la partie mobile d'un vérin linéaire dédié notamment à l'application à un système de commande de pas, la partie mobile et la partie fixe du vérin linéaire sont liées en rotation l'une à l'autre par au moins un tube de liaison supporté par les faces transversales d'extrémité de la partie mobile et associé à la partie fixe. Avantageusement, dans cet autre exemple de réalisation du moyen de lubrification, le passage interne dudit tube formant le conduit est apte à recevoir la canalisation d'acheminement du lubrifiant, en formant le chemin interne.

Ainsi, on se sert du (ou des) tube anti-rotation prévu sur le vérin linéaire pour permettre l'introduction de la (ou des) canalisation d'acheminement du lubrifiant dans celui-ci.

Dans ce cas, le chemin interne du moyen de lubrification comporte deux tronçons, un premier tronçon pour acheminer le lubrifiant par le passage interne du tube dans la partie mobile du vérin, et un second tronçon relié au premier tronçon pour acheminer le lubrifiant du passage interne au palier de transfert.

En particulier, le second tronçon peut être défini par des orifices pratiqués en correspondance dans le tube et la face transversale concernée de la partie mobile, et par une chambre annulaire ménagée entre la paroi latérale de la partie mobile et un manchon de support annulaire de la bague interne du palier, et communiquant avec lesdits orifices et la bague.

L'invention concerne également un système pour changer le pas des pales d'une hélice de turbomoteur à axe longitudinal pour aéronef, comportant :
- un vérin à déplacement linéaire centré sur l'axe et solidaire d'un carter fixe supportant l'hélice ;
- un mécanisme de liaison pour transformer la translation de la partie mobile du vérin en une rotation des pales pour en modifier le pas, et comportant un palier de transfert dont la bague interne est solidaire de la partie mobile du vérin, et un moyen de transmission entre la bague externe du palier et les pales, et
- un moyen de lubrification dudit palier de transfert.

Avantageusement, le moyen de lubrification du palier est tel que défini précédemment.

L'invention concerne également une turbomachine à hélices de propulsion coaxiales et contrarotatives, respectivement amont et aval.

Avantageusement, au moins l'hélice amont est équipée d'un système de changement du pas des pales tel que ci-dessus défini.

Les figures du dessin annexé feront bien comprendre comment l'invention peut être réalisée, en particulier, dans l'application du palier à un système d'orientation du pas d'une hélice de turbopropulseur.

La figure 1 est une vue schématique, en coupe axiale, d'un turbopropulseur à soufflante non carénée localisée en aval du générateur de gaz, incorporant un système de changement du pas des pales conforme à l'invention pour l'une des hélices de la soufflante.

La figure 2 montre schématiquement, en demi-coupe axiale, le système de changement du pas des pales avec un premier exemple de réalisation du moyen de lubrification du palier de transfert, passant par la partie mobile du vérin de commande.

La figure 3 est une vue en perspective de l'ensemble de canalisations du moyen de lubrification introduites dans la partie mobile du vérin de commande du système.

La figure 4 montre partiellement, en demi-coupe axiale, le système de changement du pas avec un second exemple de réalisation du moyen de lubrification dudit palier, passant par des tubes de liaison du vérin.

La figure 5 est un agrandissement de la canalisation représentée du moyen de lubrification et du tube de liaison de la partie mobile du vérin.

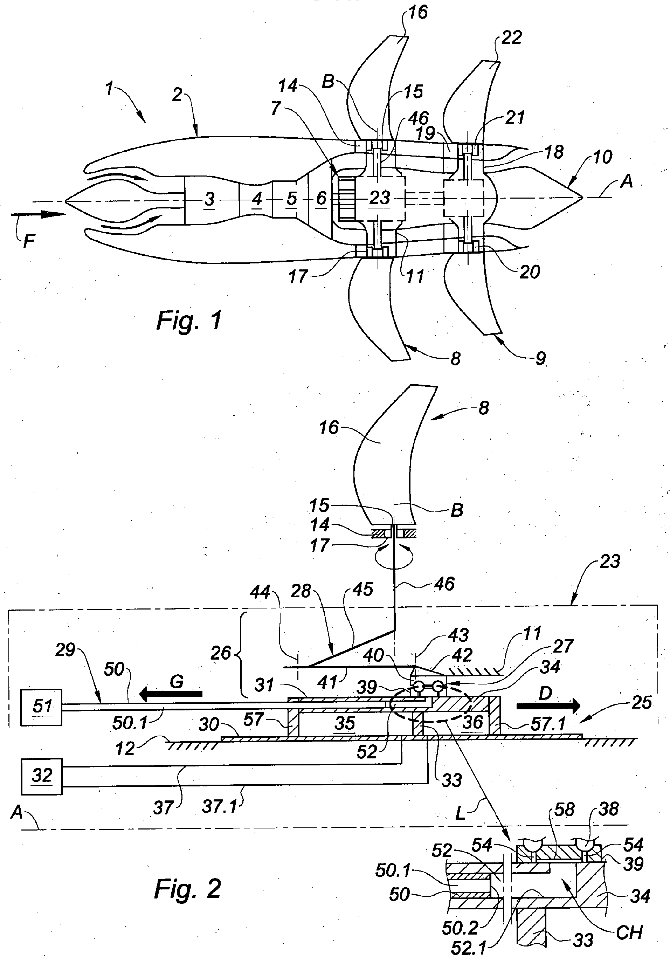

On se réfère tout d'abord à la figure 1 qui représente schématiquement un turbopropulseur à soufflante non carénée 1 (« open rotor » ou « unducted fan ») d'axe longitudinal A. Ce turbopropulseur comporte usuellement, d'amont en aval selon le sens d'écoulement du flux gazeux F à l'intérieur d'une nacelle 2 du turbopropulseur, un ou deux compresseurs 3 selon l'architecture du générateur de gaz à simple ou double étage, une chambre annulaire de combustion 4, une turbine haute pression ou deux turbines haute pression et à pression intermédiaire 5 selon ladite architecture, et une turbine libre basse pression 6 qui entraîne, par l'intermédiaire d'un réducteur ou boîtier à trains épicycloïdaux 7 et de façon contrarotative, deux hélices amont 8 et aval 9 selon le sens du flux F et alignées coaxialement selon l'axe longitudinal A du turbopropulseur pour constituer la soufflante. Saris sortir du cadre de l'invention, les hélices 8 et 9 et le boîtier à trains épicycloïdaux 7 pourraient se trouver en amont du générateur de gaz, l'ensemble étant relié à la turbine libre basse pression 6 par un arbre interne. Une tuyère 10 termine le turbopropulseur.

Les hélices sont disposées dans des plans parallèles radiaux, perpendiculaires à l'axe A, et tournent par le biais de la turbine basse pression 6 et du réducteur 7 dans des sens de rotation opposés.

Pour cela, comme le montrent les figures 1 et 2, l'hélice amont 8 comporte un carter cylindrique rotatif 11, lié en rotation à une partie correspondante du réducteur pour tourner dans un sens, et supporté par des roulements non représentés sur un carter cylindrique fixe 12. Le carter 11 se termine radialement, du côté opposé au réducteur 7, par un moyeu rotatif à anneau polygonal 14 logé de façon usuelle dans la nacelle 2 et recevant dans des logements cylindriques 17, les pieds 15 des pales 16 de l'hélice 8, lesquelles pales font ainsi saillie extérieurement de la nacelle.

De façon semblable, l'hélice aval 9 comporte un carter cylindrique rotatif 18, d'un côté lié en rotation à une autre partie du réducteur 7, pour tourner alors dans le sens opposé. Ce carter rotatif 18 est supporté par des roulements sur le carter cylindrique fixe 12 et se termine, de l'autre côté, par un moyeu rotatif à anneau polygonal 19 recevant, de façon analogue que précédemment, dans des logements 20, les pieds 21 des pales 22 de l'hélice 9.

En fonctionnement, et brièvement, le flux d'air F entrant dans le turbomoteur 1 est comprimé, puis mélangé à du carburant et brûlé dans la chambre de combustion 4. Les gaz de combustion engendrés passent ensuite dans les turbines 5 et 6 pour entraîner en rotation inverse, via le réducteur épicycloïdal 7, les hélices 8, 9 qui fournissent la majeure partie de la poussée.

Les gaz de combustion sont expulsés à travers la tuyère 10 pour augmenter ainsi la poussée du turbopropulseur 1.

Par ailleurs, les pales 16 et 22 des hélices amont et aval sont du type à calage variable, c'est-à-dire qu'elles peuvent être orientées autour de leurs axes radiaux de pivot B grâce à un système de changement ou d'orientation 23 du pas des pales, de façon que celles-ci prennent une position angulaire optimale selon les conditions de fonctionnement du turbopropulseur et les phases de vol concernées. Dans la présente description, seul le système d'orientation 23 des pales associé à l'hélice amont 8 sera décrit. L'hélice aval 9 pourra être équipée d'un système d'orientation des pales analogue ou différent de celui développé ci-après en liaison avec l'hélice amont.

À cet effet, comme le montrent les figures 1 et 2, le système 23 de changement de pas des pales (donc leur calage) est prévu dans l'espace interne situé entre le carter fixe 12 ou stator du turbopropulseur lié à l'hélice concernée 8, et le carter rotatif 11 ou rotor lié au moyeu de cette même hélice pour faire varier la position angulaire de pales et donc le pas de l'hélice.

Ce système 23 se compose principalement d'un vérin de commande à déplacement linéaire 25, d'un mécanisme de liaison 26 à palier de transfert 27 et moyen de transmission 28, et d'un moyen de lubrification 29 du palier de transfert. Ainsi, l'objectif du système est de transformer la translation du vérin en une rotation des pales.

En particulier, le vérin 25 est annulaire, puisqu'il est disposé autour des arbres non représentés du turbopropulseur, et est coaxial à l'axe longitudinal A de ce dernier. Il comporte une partie fixe cylindrique 30 entourant notamment le carter fixe 12 en étant solidaire de celui-ci, avec une immobilisation en translation et eh rotation. Autour de la partie fixe cylindrique 30 du vérin 25 se trouve la partie mobile cylindrique 31 faisant office de tige coulissante externe du vérin. Cette partie mobile ou tige 31 peut ainsi se déplacer axialement par l'action d'une source fluidique d'alimentation commandable 32 du vérin.

À cet effet, la partie fixe comporte un piston (fixe) 33 le long duquel peut coulisser avec étanchéité la paroi latérale 34 de la partie mobile 31 et qui délimite deux chambres opposées antagonistes à volume variable 35, 36. Ces deux chambres, par ailleurs étanches, sont reliées par des canalisations d'alimentation / refoulement 37, 37.1, à la source fluidique commandable 32, telle qu'un fluide hydraulique. Ainsi, selon la pression d'alimentation envoyée dans le vérin par l'une des canalisations, la partie mobile ou tige 31 peut coulisser entre deux positions extrêmes définies par des volumes minimaux et maximaux de fluide dans les deux chambres opposées 35,36.

Autour de la tige externe mobile 31 du vérin est monté, comme le montre schématiquement la figure 2, le palier de transfert 27 du mécanisme de liaison 26, palier qui, dans cet exemple, est un roulement à double rangée de billes 38. Ainsi, la bague interne 39 du roulement est fixée autour de la tige 31 du vérin en étant solidaire de celle-ci en translation. La tige ou partie mobile 31 constituant, d'une façon générale, le support mobile en translation pour la bague interne du roulement. Et la bague externe 40 de ce dernier, coopérant avec le carter rotatif 11, est en liaison avec le moyen de transmission 28 du mécanisme de liaison 26, pour assurer la rotation angulaire des pales.

À cet effet, le moyen de transmission 28 comporte une pluralité de bielles 41, en nombre identique aux pales 16, et équi-angulairement réparties les unes par rapport aux autres autour du vérin, sensiblement à l'aplomb de celui-ci. Les bielles 41 sont reliées, par l'une de leurs extrémités, à un support annulaire rotatif 42 de la bague externe 40 du roulement, par l'intermédiaire d'axes d'articulation symbolisés en 43 sur la figure 2, parallèles aux axes B des pales. Et les autres extrémités des bielles 41 sont reliées, autour d'axes d'articulation 44 parallèles aux précédents, à des manetons 45 sensiblement transversaux prévus en bout des arbres radiaux rotatifs 46 qui prolongent les pieds 15 des pales, selon l'axe B. L'orientation des pales 16 de l'hélice 8 avec changement du pas à partir du vérin 25 et du mécanisme de liaison 26 du système 23 est décrite dans la demande de brevet précité.

Le moyen de lubrification 29 du palier 27 comporte, avantageusement et dans l'exemple de réalisation des figures 2 (avec sa loupe L) et 3, une pluralité de canalisations 50 dont le passage interne 50.1 est destiné à l'acheminement d'un lubrifiant. Les canalisations sont, d'un côté, reliées à une source d'alimentation en lubrifiant 51 (huile par exemple), et, de l'autre côté, introduites dans la partie mobile ou tige cylindrique 31 du vérin 25 pour amener le lubrifiant, selon un chemin interne CH, jusqu'au palier 27. Pour cela, le chemin interne CH comporte des conduits 52 de réception des canalisations 50, qui sont ménagés, parallèlement à l'axe A, dans la paroi latérale annulaire 34 de la tige, et des trous 54 ménagés radialement dans la bague interne 39 du roulement pour acheminer le lubrifiant à l'intérieur de ce dernier.

Le terme « canalisation » est à prendre au sens large et désigne tout type de conduite, tube, tuyauterie et analogue à l'intérieur duquel peut circuler un fluide liquide ou gazeux.

Dans cet exemple, les canalisations 50 sont au nombre de six en étant régulièrement réparties angulairement les unes par rapport aux autres autour de l'axe longitudinal A. Ces canalisations sont sensiblement parallèles à cet axe et leur nombre pourrait être différent sans sortir du cadre de l'invention, l'essentiel étant d'assurer, de façon homogène et régulière, la bonne lubrification du palier de transfert.

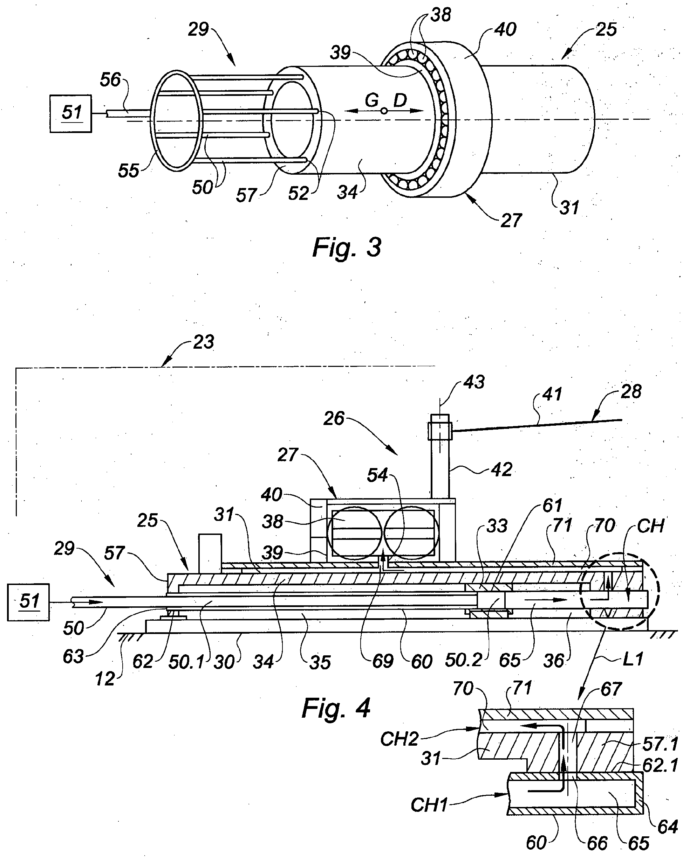

Comme on le voit sur la figure 3, les canalisations 50 sont, d'un côté, reliées les unes aux autres par un élément de liaison commun 55, dans cet exemple, en forme d'anneau, agencé radialement et muni d'un raccord 56 à la source d'alimentation en lubrifiant 51. Celle-ci est, par ailleurs, avantageusement indépendante de la source d'alimentation fluidique 32 du vérin 25. De l'autre côté, les extrémités 50.2 des canalisations 50 sont libres et s'engagent ainsi dans les conduits latéraux de réception 52 ménagés en correspondance dans la paroi latérale 34 de la tige annulaire mobile 31, parallèlement à l'action du vérin (selon l'axe A du turbopropulseur).

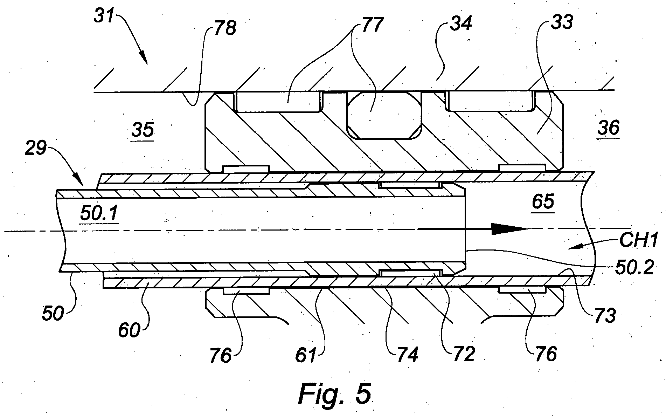

Cet ensemble de canalisations 50 issu de la source 51 est axialement fixe, lié au carter statique 12, et son agencement est déterminé de façon que les extrémités libres 50.2 des canalisations 50 restent à l'intérieur des conduits 52 de la tige mobile 31 lorsque celle-ci se trouve dans la position extrême la plus éloignée, c'est-à-dire vers la droite (flèche D) sur la figure 2, sous l'action de la pression hydraulique dans la chambre 36 issue de la source 32. A contrario, lorsque la tige mobile 31 occupe l'autre position extrême la plus à gauche (flèche G), les canalisations 50 sont presque engagées en totalité dans les conduits 52. Pour éviter les fuites, on pourrait envisager une étanchéité par joints toriques ou autres entre les extrémités libres 50.2 des canalisations et la surface interne 52.1 des conduits d'acheminement de l'huile 52. Une description de celle-ci sera faite figure 5, en regard de l'autre exemple de réalisation du moyen de lubrification.

Chaque canalisation est réalisée en une matière appropriée (métallique, composite ou autre) de préférence rigide ou semi-rigide, avec pour objectif de rester en place dans les conduits.

Plus particulièrement, chaque conduit latéral 52 de la tige mobile 31 débouche, d'un côté, de la face transversale correspondante 57 de celle-ci et, de l'autre côté, dans la paroi latérale externe 34 de la tige, à l'aplomb de la bague interne 39 du roulement. Le conduit 52 est donc pour la plus grande partie rectiligne, puis coudé radialement pour déboucher dans la paroi latérale.

Comme le montrent la figure 2 et sa loupe L, dans la bague interne 39 est ménagé un chambrage annulaire 58 dans lequel débouchent le conduit 52 et les trous 54 radialement percés dans la bague interne au niveau des rangées des billes 38.

Ainsi, on obtient une lubrification optimale homogène et constante du palier 27 en plusieurs points directement depuis l'intérieur du palier en direction des billes, et cela quelle que soit la position de la tige mobile 31 par rapport à la partie fixe 30 à piston 33 du vérin linéaire 25, puisque la bague interne est solidaire de la tige mobile. Le lubrifiant provenant de la source 51 circule dans les passages 50.1 des canalisations 50 puis dans le chemin CH (conduits 52 et trous 54) pour atteindre l'intérieur du palier.

En variante, on pourrait envisager, comme chemin interne, une unique canalisation fixe 50 issue de la source 51 et engagée dans un conduit menant jusqu'à une gorge annulaire (non représentée) prévue autour de la paroi latérale 53 de la tige, cette gorge (en lieu et place du chambrage) communiquant directement avec au moins le trou radial 54 de la bague interne. Ce ou ces trous radiaux peuvent être ménagés entre les deux rangées de bielles du roulement ou, comme précédemment, communiquer avec les pistes de roulement des billes, une lubrification optimale du roulement étant de toute façon garantie.

Par ailleurs, comme le montre la figure 4, en vue d'empêcher la rotation de la partie mobile ou tige coulissante 31 du vérin annulaire linéaire 25 par rapport à sa partie fixe 30 à piston 33, au moins un tube axial (ou tige creuse) 60 est agencé entre les deux parties 30, 31 pour les traverser et les immobiliser en rotation l'une par rapport à l'autre, tout en maintenant le coulissement entre elles. En réalité, plusieurs tubes de liaison 60 sont répartis autour des deux parties fixe 30 et mobile 31 du vérin et seule l'une d'elles est représentée sur les figures 4 et 5 montrant un autre exemple de réalisation du moyen de lubrification, les autres tubes de liaison étant structurellement et fonctionnellement identiques.

Le moyen de lubrification 29, dans cet autre exemple, utilise avantageusement au moins l'un des tubes de liaison anti-rotation 60 en remplacement des conduits 52.

Structurellement, chaque tube est disposé parallèlement à l'axe A du vérin 25 et est porté à ses extrémités par les faces transversales d'extrémité 57, 57.1 de la tige mobile 31 du vérin et, dans cet exemple de réalisation, traverse les chambres 35, 36 du vérin et le piston 33 par un trou 61 ménagé dans celui-ci. Les extrémités du tube représenté 60 sont reçues dans les faces transversales de la tige mobile du vérin grâce, là aussi, à des trous 62, 62.1 prévus dans celles-ci. Ces tubes sont axialement fixes par rapport à cette partie mobile et, bien qu'elle ne soit pas représentée, une étanchéité est prévue entre ses faces transversales et le tube de liaison anti-rotation.

L'extrémité 63 du tube 60 tournée vers la canalisation 50 est alors ouverte pour l'engagement de celle-ci dans le passage interne 65 du tube de liaison, tandis que son autre extrémité 64, au niveau de l'autre face transversale 57.1, est fermée.

En revanche, l'étanchéité entre la canalisation 50, le tube 60, le piston 33, et la tige mobile 31 du vérin est représentée en détail en regard de la figure 5.

Préalablement à la description de celle-ci, on constate que, dans le tube de liaison anti-rotation 60, est introduite partiellement la canalisation fixe 50 issue de la source fluidique de lubrification 51. L'engagement de cette canalisation est, là aussi, tel que cette dernière soit toujours dans le tube de guidage selon la position prise par la tige mobile 31 du vérin 25 pour commander l'orientation des pales.

Pour acheminer l'huile de lubrification jusqu'au roulement, le chemin interne CH comporte alors un premier tronçon CH1 pour entraîner l'huile, issue du passage 50.1 de la canalisation 50, jusque dans la partie mobile coulissante 31 du vérin, correspondant au passage interne 65 du tube, et un second tronçon CH2 pour entraîner l'huile de la partie mobile coulissante 31 jusque dans le roulement 27. En effet, contrairement à l'exemple précédent où le chemin CH (conduits 52) est intégré ou réalisé dans la tige du vérin elle-même en communiquant directement avec la bague interne 39, dans cet autre exemple, il convient d'envisager le chemin CH partiellement à l'extérieur du vérin pour pouvoir lubrifier le roulement à partir de sa bague interne.

Pour cela, comme le montre la loupe L1 de la figure 4, en aval du premier tronçon CH1 acheminant le lubrifiant dans le passage 65 de chaque tube de liaison 60, on prévoit un orifice radial 66 dans la paroi latérale du tube, proche de son fond fermé 64, et un orifice radial 67 en correspondance dans la tige annulaire mobile 31 du vérin, depuis l'extérieur de celle-ci pour déboucher dans le trou de passage 62.1 pour la réception de l'extrémité 64 du tube de liaison anti-rotation.

Ces deux orifices 66, 67, une fois les pièces du vérin assemblées, sont en correspondance l'un par rapport à l'autre, par un mécanisme usuel à détrompeur, non représenté (par exemple, une nervure sur l'extrémité libre du tube coopérant avec une rainure de réception dans la tige mobile). Ainsi, les orifices 66 et 67 sont forcément alignés.

Après le premier tronçon, le chemin interne continue par le second tronçon CH2 qui est défini par une chambre annulaire externe 70 créée par un manchon de support annulaire 71 de la bague interne 39 du roulement, lequel manchon a été étendu sur toute la longueur de la tige mobile coulissante 31, comme le montre la figure 4. Ce manchon 71 est lié en coulissement à la partie ou tige mobile 31 du vérin et délimite, avec la paroi latérale 34, la chambre annulaire externe 70 dans laquelle parvient le lubrifiant. Une étanchéité statique est effectuée entré le manchon et la tige pour rendre étanche la chambre vis-à-vis de l'extérieur.

Enfin, en prévoyant une pluralité d'orifices 69 (au moins un) répartis autour du manchon de support 71 et en regard des orifices 54 de la bague interne 39, le lubrifiant transitant par la chambre annulaire 70 traverse les orifices 69 et 54 pour lubrifier l'intérieur du roulement 27. On remarque que les orifices sont ici prévus entre les deux rangées de billes. Bien entendu, la bague interne 39, le manchon 71 et la partie mobile 31 du vérin sont liés ensemble en translation.

Ce second tronçon CH2 permet de « sortir » le lubrifiant issu du premier tronçon CH1 hors du vérin 25 pour l'amener dans le roulement 27 tout en restant solidaire de la tige ou partie mobile 31 du vérin.

Comme le montre la figure 5, l'étanchéité du premier tronçon CH1 empêchant le retour de l'huile entre la canalisation et le tube est notamment obtenue par un joint d'étanchéité 72 prévu autour de l'extrémité libre 50.2 de la canalisation 50 et coopérant avec la surface intérieure 73 de la paroi du tube de liaison anti-rofation 60, délimitant le passage 65. (La même étanchéité par le joint 72 est prévue entre les canalisations 50 et les conduits 52 dans la réalisation précédente pour éviter le retour de l'huile). Cependant, si les fuites sont jugées acceptables, on peut s'affranchir de joints d'étanchéité entre les canalisations et les tubes. La surface extérieure 74 du tube 60 et la surface interne du trou 61 dans le piston sont équipées de joints 76 pour garantir l'étanchéité entre les deux chambres 35, 36. Cette étanchéité est complétée par des joints 77 prévus au niveau de la périphérie externe du piston 33 avec la surface interne 78 de la paroi latérale 34 du vérin.

Le moyen de lubrification 29 exposé ici sous les deux solutions des figures 2 et 4, permet ainsi de transférer de l'huile issu de canalisations liées à un référentiel fixe (carter) jusqu'à des chambres « tampon » (conduits ou tubes et chambre annulaire) situées dans le référentiel mobile du vérin. Il apporte en conséquence de nombreux avantages tels que, notamment, une alimentation directe par la bague interne du roulement et donc une lubrification optimale et homogène de celui-ci quelle que soit la position du vérin, l'absence de problème de positionnement du roulement par rapport à la source d'alimentation indépendante de celle du vérin, l'absence de perturbation du système d'orientation du pas de l'hélice par la source indépendante, et une intégration partielle dans le vérin avec un encombrement réduit en conséquence.

Sans sortir du cadre de l'invention, un tel palier à moyen de lubrification peut être bien évidemment monté sur tout support mobile en translation (arbre, axe, etc...), autre que la partie mobile d'un vérin linéaire.

## Revendications

1. Palier, tel qu'un roulement, monté sur un support mobile en translation et comportant un moyen de lubrification,
le support mobile en translation est défini par la partie mobile (31) coulissant autour du piston fixe (33) d'un vérin à déplacement linéaire (25), autour de laquelle est montée la bague interne (39) du palier à lubrifier,
le moyen de lubrification (29) du palier (27) comportant au moins une canalisation d'acheminement (50) d'un lubrifiant, reliée à une source d'alimentation en lubrifiant (51), et
un conduit (52 ; 65), lié au support mobile, dans lequel s'engage au moins partiellement la canalisation du lubrifiant (50) pour acheminer, selon un chemin interne (CH), le lubrifiant depuis ledit support mobile (31) jusqu'au palier (27) en passant par la bague interne (39) de celui-ci,
**caractérisé par le fait que** ladite canalisation (50) et ledit conduit (52 ; 65) s'étendent parallèlement au déplacement en translation du support mobile (31) pour coopérer l'un avec l'autre par coulissement entre les deux positions extrêmes du support, ladite canalisation étant fixe et ledit conduit coulissant par rapport à celle-ci.

2. Palier selon la revendication 1, dans lequel le conduit (52) est ménagé dans une paroi latérale (34) du support mobile en translation (31) et dans lequel le chemin interne comporte au moins un trou (54) ménagé dans la bague interne (39) du palier et en communication avec le conduit.

3. Palier selon la revendication 2, dans lequel ledit moyen de lubrification (29) comprend une pluralité de canalisations (50) réparties angulairement les unes par rapport aux autres, et communiquant, du côté amont, avec un élément commun (55) d'acheminement du lubrifiant en liaison avec la source d'alimentation, et s'engageant, du côté aval, dans des conduits respectifs (52) prévus en correspondance dans la paroi (34) du support mobile (31).

4. Palier selon la revendication 1, dans lequel la partie mobile (31) et la partie fixe (30) du vérin linéaire (25) sont liées en rotation l'une à l'autre par au moins un tube de liaison (60) supporté par les faces transversales d'extrémité (57, 57.1) de la partie mobile et associé à la partie fixe, ledit tube ayant un passage interne (65) formant le conduit apte à recevoir la canalisation (50) d'acheminement du lubrifiant.

5. Palier selon la revendication 4, dans lequel le chemin interne (CH) du moyen de lubrification (29) comporte deux tronçons, un premier tronçon (CH1) pour acheminer le lubrifiant par le passage interne (65) dans la partie mobile (30) du vérin, et un second tronçon (CH2) pour acheminer le lubrifiant du passage interne (65) au palier de transfert (27).

6. Palier selon la revendication 5, dans lequel le second tronçon (CH2) est défini par des orifices (66, 67) pratiqués en correspondance dans le tube (60) et la face transversale concernée de la partie mobile (31), et par une chambre annulaire (70) ménagée entre la paroi latérale de la partie mobile (31) et un manchon de support annulaire (71) de la bague interne (39) du palier, et communiquant avec lesdits orifices et la bague.

7. Système pour changer le pas des pales d'une hélice de turbomoteur d'axe longitudinal A pour aéronef, comportant :
- un vérin à déplacement linéaire (25) centré sur l'axe A et solidaire d'un carter fixe supportant l'hélice ;
- un mécanisme de liaison (26) pour transformer la translation de la partie mobile (31) du vérin en une rotation des pales pour en modifier le pas, et comportant un palier de transfert (27) dont la bague interne (39) est solidaire de la partie mobile (31) du vérin, et un moyen de transmission (28) entre la bague externe (40) du palier et les pales, et
- un moyen de lubrification (29) dudit palier de transfert (27),
**caractérisé par le fait que** le moyen de lubrification (29) du palier est tel que défini selon l'une des revendications 1 à 6.

8. Turbomachine à hélices de propulsion coaxiales et contrarotatives, respectivement amont (8) et aval (9),
**caractérisée par le fait qu'**au moins l'hélice amont (8) est équipée d'un système (23) de changement du pas des pales à moyen de lubrification, tel que défini selon la revendication 7.

## Patentansprüche

1. Lager, wie beispielsweise ein Wälzlager, das auf einem translationsbeweglichen Träger montiert ist und ein Mittel zum Schmieren aufweist,
der translationsbewegliche Träger ist durch einen beweglichen Teil (31) definiert, der um den festen Kolben (33) eines Linearbewegungszylinders (25) gleitet, um den der Innenring (39) des zu schmierenden Lagers montiert ist,
wobei das Mittel zum Schmieren (29) des Lagers (27) mindestens einen Kanal zum Befördern (50) eines Schmiermittels, der mit einer Schmiermittelversorgungsquelle (51) verbunden ist, und
eine Leitung (52; 65) aufweist, die mit dem beweglichen Träger verbunden ist, in die mindestens teilweise der Kanal des Schmiermittels (50) eingreift, um das Schmiermittel über einen inneren Weg (CH) von dem beweglichen Träger (31) bis zu dem Lager (27) über den Innenring (39) davon zu befördern,
**dadurch gekennzeichnet, dass** sich der Kanal (50) und die Leitung (52; 65) parallel zur Translationsbewegung des beweglichen Trägers (31) erstrecken, um durch Gleiten zwischen den zwei Extrempositionen des Trägers miteinander zusammenzuwirken, wobei der Kanal fest ist und die Leitung relativ zu diesem gleitet.

2. Lager nach Anspruch 1, wobei die Leitung (52) in einer Seitenwand (34) des translationsbeweglichen Trägers (31) angeordnet ist und wobei der innere Weg mindestens ein Loch (54) aufweist, das in dem Innenring (39) des Lagers angeordnet und in Verbindung mit der Leitung ist.

3. Lager nach Anspruch 2, wobei das Mittel zum Schmieren (29) mehrere Kanäle (50) aufweist, die winklig zueinander verteilt sind und auf der vorgelagerten Seite mit einem gemeinsamen Element (55) zum Befördern des Schmiermittels verbunden sind, das mit der Versorgungsquelle in Verbindung ist, und auf der nachgelagerten Seite in die jeweiligen Kanäle (52) eingreifen, die in Entsprechung in der Wand (34) des beweglichen Trägers (31) vorgesehen sind.

4. Lager nach Anspruch 1, wobei der bewegliche Teil (31) und der feste Teil (30) des Linearzylinders (25) durch mindestens ein Verbindungsrohr (60) drehfest miteinander verbunden sind, das durch die Querstirnflächen (57, 57.1) des beweglichen Teils getragen ist und mit dem festen Teil verbunden ist, wobei das Rohr einen inneren Durchgang (65) aufweist, der die Leitung bildet, die geeignet ist, den Kanal (50) zum Befördern des Schmiermittels aufzunehmen.

5. Lager nach Anspruch 4, wobei der innere Weg (CH) des Mittel zum Schmieren (29) zwei Abschnitte aufweist, einen ersten Abschnitt (CH1) zum Befördern des Schmiermittels durch den inneren Durchgang (65) in den beweglichen Teil (30) des Zylinders und einen zweiten Abschnitt (CH2), um das Schmiermittel des inneren Durchgangs (65) zu dem Übertragungslager (27) zu befördern.

6. Lager nach Anspruch 5, wobei der zweite Abschnitt (CH2) durch Öffnungen (66, 67), die in Entsprechung in dem Rohr (60) und der betreffenden Querfläche des beweglichen Teils (31) ausgeformt sind, und durch eine ringförmige Kammer (70) definiert ist, die zwischen der Seitenwand des beweglichen Teils (31) und einer ringförmigen Trägermuffe (71) des Innenrings (39) des Lagers ausgebildet ist und mit den Öffnungen und dem Ring verbunden ist.

7. System, um den Einstellwinkel der Rotorblätter eines Propellers eines Triebwerks mit Längsachse A für ein Luftfahrzeug zu ändern, umfassend:
- einen Linearbewegungszylinder (25), der auf der Achse A zentriert ist und mit einem festen Gehäuse fest verbunden ist, das den Propeller trägt;
- einen Verbindungsmechanismus (26), um die Translation des beweglichen Teils (31) des Zylinders in eine Drehung der Rotorblätter zu verwandeln, um den Einstellwinkel davon zu ändern, und der ein Übertragungslager (27), dessen Innenring (39) mit dem beweglichen Teil (31) des Zylinders fest verbunden ist, und ein Übertragungsmittel (28) zwischen dem Außenring (40) des Lagers und den Rotorblättern aufweist, und
- ein Mittel zum Schmieren (29) des Übertragungslagers (27),
**dadurch gekennzeichnet, dass** das Mittel zum Schmieren (29) des Lagers derart ist, wie nach einem der Ansprüche 1 bis 6 definiert.

8. Turbomaschine mit koaxialen und gegenläufigen Antriebspropellern, die jeweils vorgelagert (8) und nachgelagert (9) sind,
**dadurch gekennzeichnet, dass** mindestens der vorgelagerte Propeller (8) mit einem System (23) zum Ändern des Einstellwinkels mit einem Mittel zum Schmieren ausgestattet ist, wie nach Anspruch 7 definiert.

## Claims

1. Bearing, such as a rolling bearing, mounted on a support able to move in translation and comprising a lubrication means,
the support able to move in translation being defined by the movable part (31) sliding about the fixed piston (33) of a linear-movement actuator (25), around which the inner ring (39) of the bearing to be lubricated is mounted,
the means (29) for lubricating the bearing (27) comprising at least one pipe (50) for conveying a lubricant, connected to a lubricant supply source (51), and
a conduit (52 ; 65) connected to the movable support, in which engages, at least in part, the pipe (50) for conveying the lubricant on an internal path (CH) from said movable support (31) to the bearing (27), passing through the inner face (39) thereof,
**characterised in that** said pipe (50) and said conduit (52 ; 65) extend parallel to the translational movement of the movable support (31) in order to cooperate with each other by sliding between the two extreme positions of the support, said pipe being fixed and the conduit sliding with respect thereto.

2. Bearing according to claim 1, wherein the conduit (52) is provided in a lateral wall (34) of the support able to move in translation (31) and wherein the internal path comprises at least one hole (54) made in the inner ring (39) of the bearing and in communication with the conduit.

3. Bearing according to claim 2, wherein said lubrication means (29) comprises a plurality of pipes (50) distributed angularly with respect to one another and communicating, on the upstream side, with a common element (55) for conveying the lubricant connected to the supply source, and engaging, on the downstream side, in respective conduits (52) provided in correspondence in the wall (34) of the movable support (31).

4. Bearing according to claim 1, wherein the movable part (31) and the fixed part (30) of the linear actuator (25) are interconnected in rotation by at least one connection tube (60) supported by the transverse end faces (57, 57.1) of the movable part and associated with the fixed part, said tube having an internal passage (65) forming the conduit able to receive the pipe (50) conveying the lubricant.

5. Bearing according to claim 4, wherein the internal path (CH) of the lubrication means (29) comprises two portions, a first portion (CH1) for conveying the lubricant through the internal passage (65) in the movable part (30) of the actuator, and a second portion (CH2) for conveying the lubricant from the internal passage (65) to the transfer bearing (27).

6. Bearing according to claim 5, wherein the second portion (62) is defined by orifices (66, 67) formed in correspondence in the tube (60) and the relevant transverse face of the movable part (31), and by an annular chamber (70) formed between the lateral wall of the movable part (31) and a sleeve (71) for annular support of the inner ring (39) of the bearing, and communicating with said orifices and the ring.

7. System for changing the pitch of the vanes of a turboshaft engine propeller having a longitudinal axis A for an aircraft, comprising:
- a linear-movement actuator (25) centred on the axis A and rigidly connected to a fixed casing supporting the propeller;
- a connection mechanism (26) for transforming the translation of the movable part (31) of the actuator into a rotation of the vanes in order to modify the pitch thereof, and comprising a transfer bearing (27), the inner ring (39) of which is rigidly connected to the movable part (31) of the actuator, and a means of transmission (28) between the outer ring (40) of the bearing and the vanes, and
- a means (29) for lubricating said transfer bearing (27),
**characterised in that** the means (29) for lubricating the bearing is as defined according to one of claims 1 to 6.

8. Turbine engine having coaxial and contrarotatory propulsion propellers, upstream (8) and downstream (9) respectively,
**characterised in that** at least the upstream propeller (8) is equipped with a system (23) for changing the pitch of the vanes having lubrication means, as defined according to claim 7.
